# EUROPEAN PATENT SPECIFICATION

(11) **EP 1 722 139 B1**
(45) Date of publication and mention of the grant of the patent: **29.12.2010**
(21) Application number: 05717180.3
(22) Date of filing: 02.03.2005
(51) Int. Cl.: F16K 15/18, F16K 31/52, F17C 13/04

(54) **PLUG VALVE FOR LIQUEFIED GAS CONTAINERS**
KEGELVENTIL FÜR FLÜSSIGGASBEHÄLTER
ROBINET DE FERMETURE DESTINE A UN RECIPIENT POUR GAZ LIQUEFIES

(30) Priority: 05.03.2004 MA 26325
(43) Date of publication of application: 15.11.2006
(73) Proprietor: Plaxats Oller, Salvador, 29780 Nerja, Malaga (ES)
(72) Inventor: Plaxats Oller, Salvador, 29780 Nerja, Malaga (ES)
(74) Representative: Curell Aguilà, Marcelino
(86) International application number: PCT/ES2005/000096
(87) International publication number: WO 2005/085689

(56) References cited:
- WO-A2-02/18822
- FR-A1- 2 177 551
- FR-A1- 2 659 420
- US-A- 1 625 044
- US-A- 2 370 115
- US-A- 2 408 912
- US-A- 3 027 905
- US-A1- 2003 034 468

## Description

The present invention relates to a shut-off valve for metal liquefied gas containers, which is specially conceived for bottles or containers of liquefied gases, preferably those derived from petroleum such as, for example, butane and propane, in their industrial and domestic use.

The majority of containers of liquefied gas from petroleum derivatives are provided, at the filling and emptying mouth thereof, with a check valve which acts automatically by means of a spring-loaded ball shut-off member applied against a resilient seat washer, to which there also contributes the pressure of the gas enclosed in the chamber formed between the surface of the liquefied gas and the wall of the container thereof.

These check valves with ball shut-off member reliably fulfil their closing mission during transportation and storage, on the assumption that the seating of the shut-off member and its seat is perfectly tight, a circumstance which may be altered by the deposition of dirt on the surface and in microcavities formed by oxidation by atmospheric agents. This dirt, accidentally inserted between the shut-off member and its seat, may give rise to slight leaks. This circumstance may occur mainly in the use of such liquefied gas containers in the country, on beaches, in camping sites, villages of under-developed countries, etc.

In the majority of cases, in order to be able to use the liquefied gas correctly and safely, faucet shut-off devices with a hand-wheel are used. These are, on the one hand, screwed onto the check valve and cause the opening of the latter by an appendix which pushes and displaces the ball shut-off member on reaching the end of the screwing of the faucet with hand-wheel and, on the other hand, are provided with a pressure reducer comprising a gas outlet at the safe consumption pressure and with a flow rate regulated by the hand-wheel faucet, whereby the gas consuming appliance, either a gas-ring, a lamp, a stove, welding torch, refrigerator, etc. is safely supplied.

Notwithstanding the good working of such shut-off valves, they have certain drawbacks which, although they do not affect their safety, do affect their maintenance and in, extremely rare, cases, such as those described above, gas leaks may occur that are capable of causing accidents by ignition and/or explosion of the liquefied gas.

Among the drawbacks attributable to hand-wheel faucets the following are worthy of highlighting:
a. the manipulation of the hand wheel during refilling of the container makes automation of the process difficult.
b. a great force is required to open the hand-wheel if it has been tightly closed.
c. there is no indication of the open-closed status of the faucet, and
d. the hand-wheel and the screw thread are fragile and require protection by means of a hood, with the drawback of having to fit and remove it during use or when refilling.

US1625044 discloses a shut-off valve for liquefied gas containers of the kind according to the preamble of claim 1, in which the valve mechanism consists in a faucet shut-off device operated by a hand-wheel.

US2408912 discloses a shut-off valve for liquefied gas containers of the kind according to the preamble of claim 1, in which the opening means comprise a lever which pushes a stem up to an open position, whereas the closing means consist in a spring which pushes back said stem up to a closed position independently from said lever.

Likewise, at the present time, the use of such liquefied gas containers, as stated above, implies the fact that the check valve of the containers is always in the open position, the gas outflow being shut off by the hand-wheel faucet type regulator device, the open or closed status of which it is difficult to appreciate by the naked eye and which, in view of its structure, allows an infinity of positions between closed and fully open, which in a position of defective closure may give rise to leaks.

On the other hand, with a view to avoiding the use of hand-wheel faucets and of the means they must include to keep the container check valve open, it would be desirable to have a shut-off valve which "of itself had a check valve and only opening and closing means for this valve with which the positioning of its shut-off member would be appreciable to the naked eye.

Furthermore, it would be important for said shut-off valve to have, in its check valve, a shut-off member which was applied against the closure seat thereof with one same constant surface to avoid deterioration by deposition of dirt and by oxidation and, at its gas outflow mouth, a protective cap having guarantee seal means.

In the face of these proposals and with the intention of ensuring absolutely that each position of the lever corresponds always to one only of the check valve positions, either open or closed, and that this be compatible with the remaining proposals, the solution has been adopted of providing an operating lever of the shut-off valve which is associated with the function of the conventional stem which determines only the opening of the ball shut-off member directly and such that in no case is there used a spring or the like to reposition the lever.

In accordance with the foregoing solution, the shut-off valve according to the invention has been developed. This is formed by a support body which, provided with screw thread or other means for attachment to the mouth of the liquefied gas container, associates a check valve with opening and closing means therefor controlled by a desmodromic cam incorporating an operating lever.

One feature of the invention is that the support body, traversed by an axial conduit, is differentiated into: an open end portion, which is provided with means for insertion by screwing into the mouth of the liquefied gas container; an intermediate portion communicating with the outside by means of a transverse conduit debouching into a gas delivery mouth; and a partly closed end portion, forming a laterally open recess, in which there is mounted a desmodromic cam that, provided with an operating lever, slides between two opposed walls of said recess to actuate the opening and closing means of the check valve.

A preferred embodiment of the invention is the one in which the support body comprises:
a. - a check valve formed by a laterally open spring box body, inside which there moves a shut-off member that is applied against a shut-off member seat by a spring.
b. - an actuator for the shut-off member of the check valve by axial thrust, which is formed by a stem sliding inside the axial conduit disposed in the support body that has a smaller diameter portion and is applied at its free end against the check valve shut-off member and has a further larger diameter portion which is articulated to the desmodromic cam having an operating lever and rotating between two parallel walls of the end recess of said support body, at the same time as said sliding stem, at a portion of its larger diameter half, corresponding to its articulation to the desmodromic cam, has sealing means for its sliding inside said axial conduit in a portion thereof comprised between one end of said axial conduit and a conduit transverse thereto that places a portion of said axial conduit, comprised between the shut-off member and the said transverse conduit, in communication with the outside, in which it opens with a threaded gas delivery mouth.

A further embodiment of the invention is that to one same support body, axially provided with a conduit and at one end thereof with means for its insertion by screwing into the container mouth, the following members are functionally associated:
a. - a check valve formed in a large axial recess, provided at the end where the support body is inserted by screwing in the mouth of the container, in which axial recess there is arranged a shut-off assembly that, urged by a spring and provided with an external O-ring extends in said large recess guided, on the one hand, by a sleeve threaded in the mouth of said recess that forms at the same time a frustoconical seat for said O-ring and, on the other hand, it is guided by a smaller axial recess open in the bottom of the afore-mentioned large recess and in communication with a conduit that is also axial and in which there extends an actuator for the shut-off assembly.
b. - the shut-off assembly is formed by the association of a main body and a guide bushing that form a cylinder for a plunger which is radially in communication with a surrounding chamber of the assembly at one end, and
c. - the actuator for the shut-off assembly of the check valve is formed by a stem sliding sealed and with limits inside the axial conduit of the support body itself, which stem is articulated at one end to a desmodromic cam that is housed in an end recess of the support body itself opposite to the axial recess of the check valve and is provided with an operating lever, while at the other end, which is formed as a tube up to coinciding with a conduit transverse to said axial conduit that opens to the outside of the support body through the gas discharge mouth, it is provided with a stop flange having a sealing O-ring.

A further embodiment of the invention consists of one in which in one same support body, axially provided with a conduit and an actuator controlled by a desmodromic cam having an operating lever and means for its insertion by screwing in the mouth of the container, is **characterized in that** the actuator, which is tubular along its entire length, is fixedly attached at one to an external shut-off assembly, engages an internal shut-off assembly and places the interior thereof in communication with the atmosphere.
a. - the actuator is formed by a tube extending along an axial conduit of the support body and has a flared end attached to the external shut-off assembly, while at the other end it is attached to an open hood that is provided with sealing gaskets for its extension along the inside of the axial conduit, of an orifice in communication with the atmosphere and articulated to a desmodromic cam provided with an operating lever.
b. - the external shut-off assembly is provided in the interior thereof in communication with the actuator, with a valve calibrated at a risk pressure which releases the gas contained in the container at an abnormally high pressure.
c. - the internal shut-off assembly is formed by a cylindrical cup having a partly closed frustoconical mouth, which is fixed to the actuator passing through the bottom thereof, which bottom is provided with an orifice for the passage of gas, is urged by a spring and has therein a sliding piston, through which the actuator passes, and which is provided with a shut-off gasket for application against the concave portion of the frustoconical mouth of said cup.

Further features of the invention will be described in detail in the following description of embodiments of the invention in which reference is made to the accompanying illustrative drawings, in which:
Figure 1 is a front elevation view of a first embodiment of a shut-off valve according to the invention.
Figure 2 is a side elevation view of the shut-off valve of Figure 1 assembled in the mouth, in section, of a metal liquefied gas container.
Figure 3 is a perspective view of the shut-off valve of Figure 1.
Figure 4 is a cross section view on the line IV-IV of Figure 1, in which the valve is shown in the closed position.
Figure 5 is a view of the shut-off valve shown in Figure 4 that, in this Figure 5, is illustrated in the open position.
Figure 6 is a cross section view on the line VI-VI of Figure 5.
Figure 7 is a front elevation view, partly in section, of the shut-off valve of Figure 1, mounted in the mouth of the liquefied gas container and a handle arrangement attached to said mouth.
Figure 8 is a diametric section view similar to Figure 4 of a second embodiment of the shut-off valve of the invention, including a safety device for the case in which the supply conduit of the consumer appliance should break.
Figure 9 is a diametric section view similar to Figure 4 of a third embodiment of the shut-off valve of the invention, comprising a safety device equivalent to that of Figure 8 and further incorporating an excess pressure compensation device in the liquefied gas container.

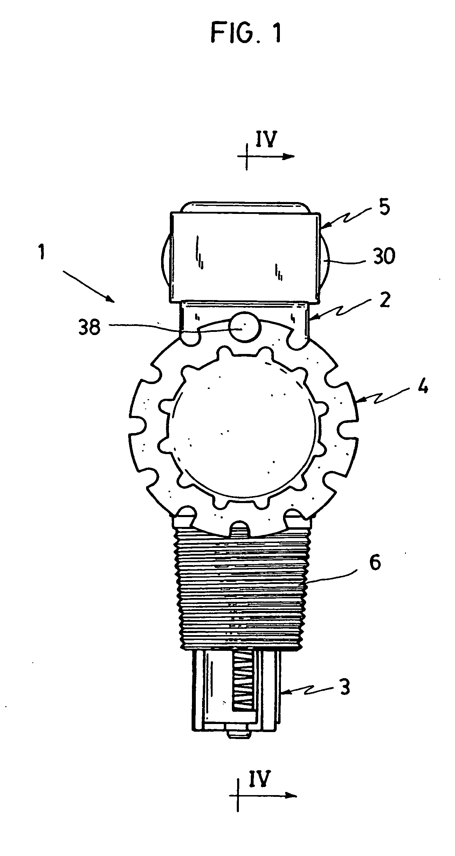

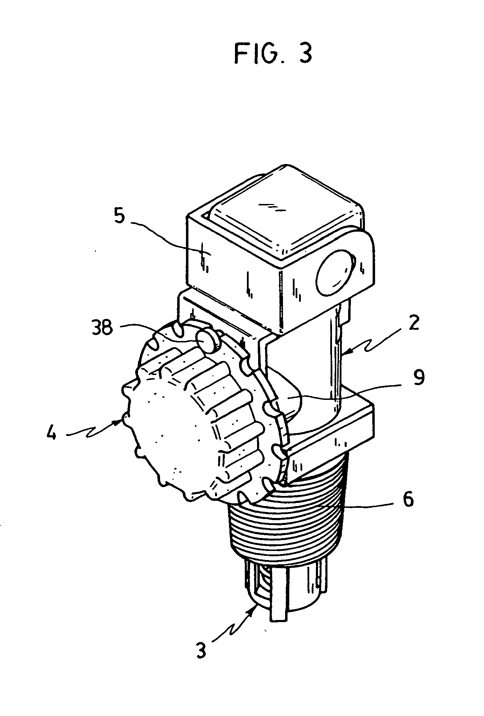

Figures 1, 2 and 3 show the outside of a first embodiment of a shut-off valve 1 comprising the object of the invention.

Said shut-off valve 1 is formed by a support body 2, a check valve 3 and a safety and guarantee cap 4. The two last named items are attached to the said support body 2, which, furthermore, includes operating means to be described later.

As may be seen in the figures, the support body 2 is provided at the upper end thereof with the articulated joint for a support 5 of said cap 4, at a bottom end thereof with a threaded frustoconical portion 6 that is appropriate for being inserted by screwing into the mouth 7 of the liquefied gas container 8 and, intermediate the ends, with a discharge fitting 9.

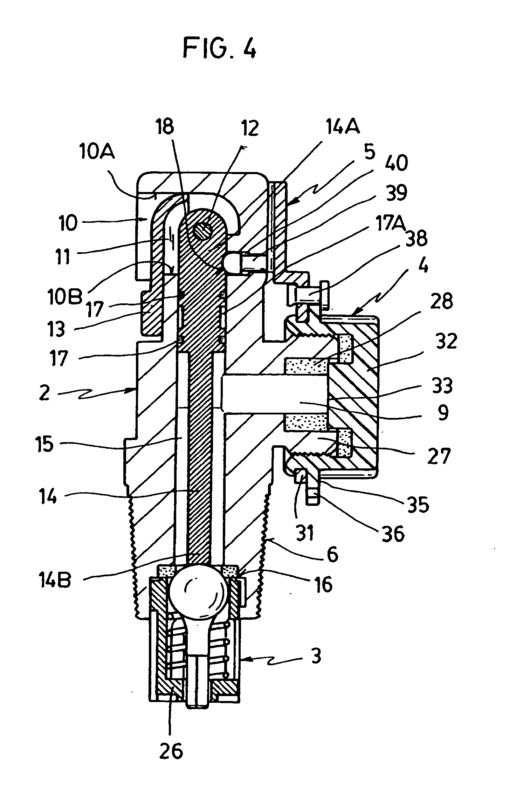

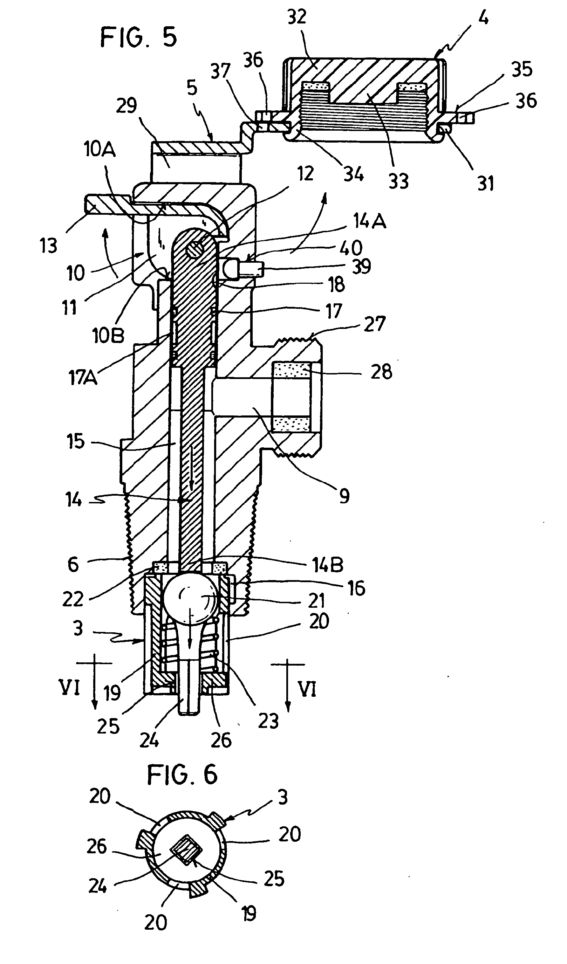

Figures 4 and 5 show the invisible part of the upper end of the upper body, where there is to be seen a recess 10 in which a desmodromic cam 11 is housed. This cam rotates in constant contact with the walls 10A and 10B of the recess 10 and is provided with a shaft 12 for an actuator of the retaining cam.

This desmodromic lever 11 is provided with an operating lever 13 which, in Figure 4, is in the folded down position corresponding to the situation of shut-off valve 1 closed and in Figure 5, it is in the outwardly projecting position that corresponds to the situation of shut-off valve 1 open, owing to the fact that the said actuator is articulated to the shaft 12 of this desmodromic cam 11 and has the form of a sliding stem 14 that acts on the check valve 3 as will be described later.

This sliding stem 14 extends along the inside of an axial conduit 15 provided in the support body 2 and which opens at one end in the recess 10 and at the other end in a housing 16 for insertion of the check valve 3.

Said sliding stem 14 is articulated at one end 14a to the shaft 12 of the desmodromic cam 11 and has two grooves 17 for O-rings, a depression 17A for lubrication and a housing 18 for insertion of a retainer to be described later, while at the other end 14b, it acts, as already stated, on the check valve 3.

The said check valve 3 is formed by a spring box body 19, open at the side in windows 20, inside which there is a shut-off member 21 urged against a seat 22 by a spring 23.

As may be seen in the figures described, the shut-off member 21 is of the ball type, but with the peculiarity that orthogonally opposite to the seat plane it has fixedly attached a slide appendix 24 which slides preferably without the possibility of rotation through a guide orifice 25 provided in the bottom 26 of the said spring box body 19.

On the other hand, this spring box body 19, as shown in Figures 4 and 5, is provided with screw thread, bayonet or other means for fitting into the housing 16 of the lower end of the support body 2 together with a sealing gasket forming the seat 22.

The fitting 9 terminates in a threaded mouth 27 including a sealing seat 28, all appropriate for receiving the cap 4 that is rotatably attached to the free end of the support 5 that at the other end has two tabs 29 through which there are rotation means 30 which do not affect the desmodromic cam 11 and has a castellated flange 35, the gaps 36 of which coincide with an orifice 37 formed in said support 5 of the cap 4 for mounting a tamper evident retainer 38, as shown in Figure 4, which is broken the first time the liquefied gas is used, as shown in Figure 5.

In turn, the sliding stem 14 has the housing 18 for receiving the head of a retainer 39 sliding in a conduit 40 provided in the wall of the support body 2 against which abuts the support 5 of the cap 4 in its closed position, the length of said retainer 39 being longer than that of the stepped conduit 40 by the magnitude of the depth of the housing 18. This allows the support 5, in the closed position of the cap 4, to push the retainer 39 to block its head in the housing 18, thereby preventing the movement of the sliding stem 14 and consequently, operation of the lever 13 and of the check valve 3.

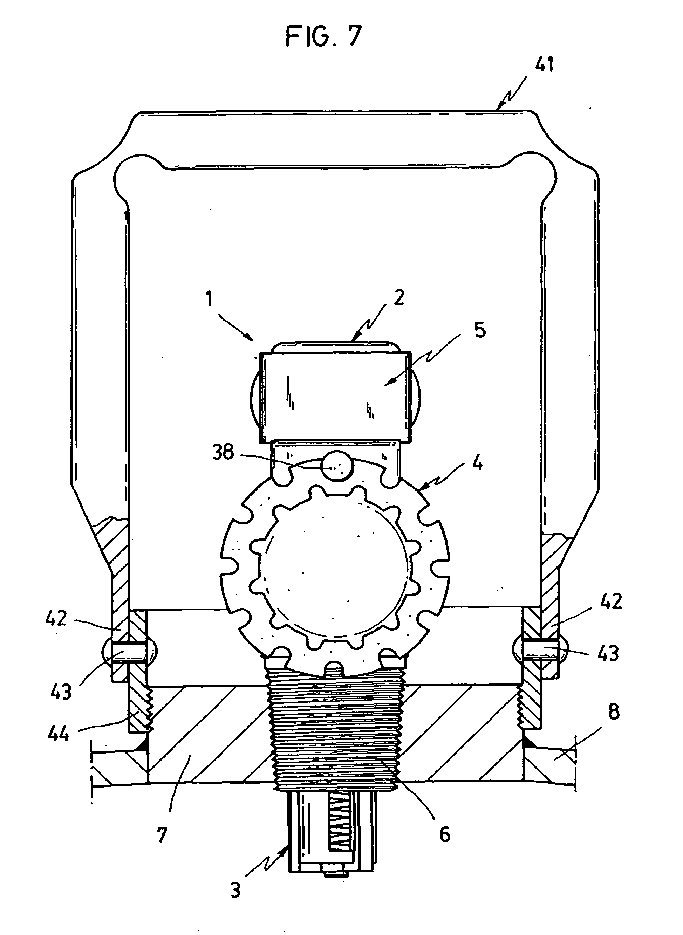

Figure 7 shows a possible embodiment of a handle 41 for carrying the container 8, without interfering with the shut-off valve 1 of the invention. It consists of a member shaped as a rectangular arch, obtained by shaping a rod or tube which is articulated at its ends 42 with the riveted pins 43 to a bushing 44 screwed on the mouth 7 of the said liquefied gas container 8.

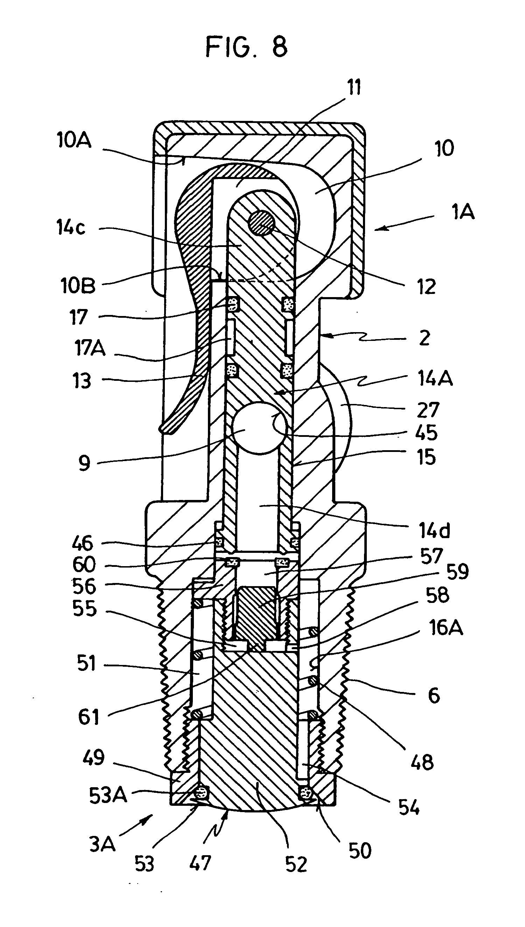

Figure 8 illustrates a second embodiment of a shut-off valve according to the object of the invention. It will be indicated with the reference 1A to differentiate it from the one described up to now, since it has certain formal differences in its common constitution and includes elements not included in the previous one, but which are susceptible of being included therein.

The shut-off valve 1A shown in diametric section in said Figure 8 comprises a support body 2, similar to that of the shut-off valve 1, having at one end a recess 10 for functionally housing a desmodromic cam 11 that is provided with an operating lever and extends with free rotation on the walls 10A and 10B of the said recess 10, an axial conduit 15 along which there extends a sliding stem 14A articulated to said desmodromic cam 11, a fitting 9 that opens in a threaded discharge mouth 27 and an end housing 16A for configuration of a check valve 3A.

The sliding stem 14A of Figure 8, unlike the sliding stem 14 of Figures 4 and 5, has its upper half 14c similar to the previous case of the sliding stem 14, having the articulation shaft 12 to the desmodromic cam 11, the grooves 17 for sealing gaskets and the lubrication depression 17A, while its lower half 14d is tubular, with a transverse orifice 45, in connexion with the discharge fitting 9, and an abutment flange 46 with sealing gasket.

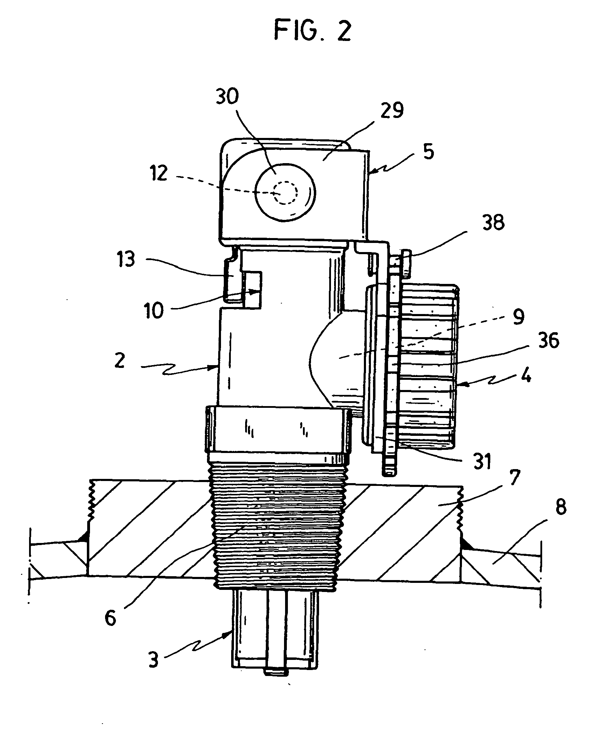

The check valve 3A is formed by a large stepped recess 16A, provided at the end of the support body 2, that has the threaded frustoconical portion 6 for insertion in the mouth 7 of a liquefied gas container 8, as shown in Figures 2 and 7 and is formed by the association in its interior of a shut-off assembly 47 urged by a spring 48 held in a threaded bushing 49 that forms a seat 50 for said shut-off assembly 47 and delimits a surrounding chamber 51.

The shut-off assembly 47 is formed by a main body 52 that slides inside the threaded bushing 49 and is provided with an external flange 53 having an O-ring, an axial slot 54 and an axial end recess 55, in which there is screwed a guide bushing 56 to form, between both, a cylinder 57 that is in communication with the surrounding chamber 51 over a radial conduit 58 and floatingly receives a plunger 59, which acting as a shut-off member may reach a resilient seat 60 installed in the mouth of the guide bushing 56. This plunger 59 is provided at its end in contact with the bottom of the cylinder 57 with means allowing the action of the gas flowing from the surrounding chamber 51 to keep it in a floating position and its passage around the plunger, to give rise to its exit towards the consumer appliance through the discharge mouth 27. Such means consist, respectively, of a diametric groove or shoulder 61 and axial reductions of the right section of the plunger 59.

The arrangement of dual shut-off means, namely the shut-off assembly 47 as main shut-off means and the plunger 59 with its seat 60, as secondary safety shut-off means, is to act in the case of a gas flow-rate superior to the standard rate of the consumer appliance, such as may be breakage or disconnexion of the conduit connecting the shut-off valve 1 and/or the pressure reducer thereof to the said consumer appliance, In such case, the plunger 59 ceases to float in the gas and is forced, by the sudden increase in the gas pressure, to bear against the seat 60 and be held in said shut-off position, thereby preventing the possibility of an accident because of a gas leak.

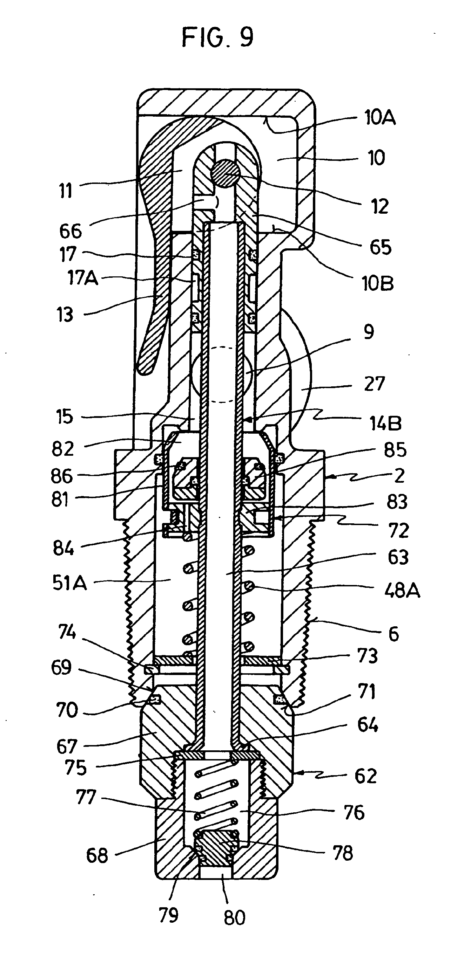

Figure 9 shows another embodiment of a shut-off valve 1 B according to the object of the invention, in which the support body 2 is provided, at one of its ends, with the recess 10 in which the desmodromic cam 11 operates, with its operating lever 13, which is articulated by the shaft 12a to an actuator 14B which extends along the interior of the axial conduit 15, at the center, with a discharge fitting 9 to a threaded port 27 and, at its other end, with the threaded frustoconical portion 6 for insertion of the support body 2 in the mouth 7 of a liquefied gas container 8, as shown in Figures 2 and 7.

Said actuator 14B, which is tubular over its entire length, is firmly releasably attached at the end opposite the one associated with the desmodromic cam 11, with an external shut-off assembly 62 and places said shut-off assembly 62 in communication with the atmosphere.

The actuator 14B, as stated above, is formed by a tube 63 that extends along the axial conduit of the support body 2, has a flared end 64 and is held by the external shut-off assembly 62, while it is fixed at the other end to an open hood 65 that is provided with the sealing gaskets 17, the lubrication depression 17A, an orifice 66 for communication with the atmosphere and the articulation by way of the shaft 12 with the desmodromic cam 11.

The external shut-off assembly 62 is formed by the demountable association of a shut-off part 67 and a sealing part 68.

The shut-off part 67 forms a moving shut-off arrangement formed by a chamfer 69 and a resilient gasket 70 which bears against a seat 71 provided in the edge of an axial recess 51A of the support body 2, under the action of a spring 48A urging the actuator 14B by its action on an internal shut-off assembly 72 and its seating on a washer 73 mounted by a circlip 74 inside the lower end of the support body 2.

The sealing part 68 is releasably associated with the shut-off part 67, trapping the flared end 64 of the actuator 14B by means of a washer 75 and forms an internal space 76 in which there is housed a spring 77 which urges with a preset force a shut-off member 78 sealingly applied on a seat 79 in communication with the interior of the liquefied gas container through the orifice 80.

The internal shut-off assembly 72 is formed by a cylindrical cup 81 having and tapers inwardly an the mouth 82 and which is fixed to the tube 63 of the actuator 14B passing through its bottom wall 83, which bottom wall 83 has an orifice 84 in communication with the surrounding chamber 51A for the passage of the gas when the external shut-off assembly 62 is open, and is urged by the spring 48A.

This cup 81 is provided in its interior with a piston 85 through which said actuator 14B freely passes and is provided with sealing gasket 86 to be applied against the tapering mouth 82, acting in a similar way to the plunger 59 in the case of Figure 8.

In this embodiment of Figure 9, the arrangement of the shut-off member 78 in direct communication with the gas in the container and in the case in which the external shut-off assembly 62 is closed, provides for the possibility of the shut-off means 78 being opened and the gas flowing directly to the atmosphere if the pressure inside said container reaches a risk pressure regulated by the spring 77.

## Claims

1. A shut-off valve for liquefied gas containers, specially appropriate for containers of liquefied petroleum gases, in their industrial and domestic use, which are provided with a check valve (3), which closes automatically and is opened voluntarily by means of a regulating valve having a pressure reducer, with which the supply, flow-rate and the pressure of the gas are controlled in use, and which is for allowing the delivery of the gas from the container (8), the direct filling of the same container (8) with liquefied gas, control of a possible excess pressure of the gas in the container (8) and the detection and control of the gas by accidental disconnexion of the consumer appliance relative to the regulating valve of the liquefied gas container (8), said shut-off valve (1) being formed by a support body (2) that, being provided with means for attachment to the mouth (7) of the container (8), associates said check valve (3) with opening and closing means (14) thereof, **characterised in that** said opening and closing means (14) are controlled by a desmodromic cam (11) having an operating lever (13).

2. The shut-off valve for liquefied gas containers, according to claim 1, **characterized in that** the support body (2), crossed by an axial conduit (15), is differentiated into an open end portion (16), which is provided with means (6) for insertion by screwing in the mouth (7) of the liquefied gas container (8), into an intermediate portion communicating with the outside by means of a transverse conduit (9) which debouches in a gas discharge mouth (27) and into a partly closed end portion forming a laterally open recess (10) in which there is mounted said desmodromic cam (11) that, provided with said operating lever (13), slides between two opposite walls (10A) and (10B) of said recess (10) to act on the opening and closing means (14) of the check valve (3).

3. The shut-off valve for liquefied gas containers, according to claim 2, wherein:
said check valve (3) is formed by a laterally open spring box body (19), inside which there moves a shut-off member (21) that is urged against a shut-off member seat (22) by a spring (23);
said opening and closing means of said check valve (3) consists of an actuator for said shut-off member (21) of the check valve (3) by axial thrust, which is formed by a stem (14) sliding inside the axial conduit (15) disposed in the support body (2) that, at one portion (14B) thereof, is of smaller diameter and engages at its free end the shut-off member (21) of the check valve (3) and, at the other portion (14A) is of larger diameter and has sealing means (17) for its sliding inside said axial conduit (15) in a portion thereof comprised between one end of said axial conduit (15) and a conduit (9) transverse thereto which places a portion of said axial conduit (15), comprised between the shut-off member (21) of the check valve (3) and the said transverse conduit (9), in communication with the outside, in which it opens with a threaded gas delivery mouth (27);
**characterised in that** said stem (14), at its portion (14A) of larger diameter is articulated to said desmodromic cam (11) that has said operating lever (13) and slides between the two parallel walls (10A, 10B) of the end recess (10) of said support body (2).

4. The shut-off valve for liquefied gas containers according to claim 3, **characterized in that** the gas discharge mouth (27) is provided internally with a sealing sleeve (28) and is threaded externally and provided with a threaded security cap (4), said threaded security cap (4) being mounted to an oscillating support (5) which is articulated to the end of the support body where the recess (10) for housing the desmodromic cam (11) is located.

5. The shut-off valve for liquefied gas containers according to claim 4, **characterized in that** the threaded security cap (4) is provided with a tamper evident means (38).

6. The shut-off valve for liquefied gas containers according to claim 5, **characterized in that** the tamper evident means consists of a pin (38) that, irremovably installed between the oscillating support (5) and a gap (36) of a crown (35) of the threaded cap (4), is susceptible of being ruptured when the threaded security cap (4) is operated for the first time and guarantees the content of the container.

7. The shut-off valve for liquefied gas containers according to claim 4, **characterized in that** the actuator formed by the sliding stem (14) has, between its point of articulation (12) to the desmodromic cam (11) and the sliding sealing means (17), a housing (18) for the head of a retainer (39) which traverses the support body (2) and is urged by the oscillating support (5) of the threaded cap (4) in its closed position to determine the blocking of said sliding stem (14) and disabling of the operating lever (13) of the desmodromic cam (11).

8. The shut-off valve for liquefied gas containers according to claim 2, wherein:
said check valve (3A) is formed in a large axial recess (16A), arranged at the end (6) for insertion by screwing of the support body (2) in the mouth (7) of the container (8), in which axial recess (16A) there is arranged a shut-off assembly (47) that, urged by a spring (48) and provided with an external O-ring (53A), extends in said large end recess (16A) guided, on the one hand, by a sleeve (49) threaded in the mouth of said recess that forms at the same time a frustoconical seat (50) for said O-ring (53A) and, on the other hand, by a smaller axial recess open in the bottom of the said large recess and in communication with a conduit (15) that is also axial and in which there extends an actuator for said shut-off assembly (47) as opening and closing means (14) of the check valve (3A);
said shut-off assembly (47) being formed by the association of a main body (52) and a guide bushing (56) that form a cylinder (57) for a plunger (59) which is in communication with a surrounding chamber (51) of the shut-off assembly (47) at one end; and
said actuator for the shut-off assembly (47) of the check valve (3A) being formed by a stem (14A) sliding sealed and with limits inside the axial conduit (15) of the support body (2), which stem (14A), at one end (14d) thereof which is formed as a tube up to coinciding with an orifice (45) transverse to said axial conduit (15) that opens to the outside of the support body through the fitting (9) and the gas discharge mouth (27), is provided with a stop flange having a sealing O-ring (46) **characterised in that** said stem (14A) is articulated, at the other end (14c) thereof, to said desmodromic cam (11) that, housed in an end recess (10) of the same support body (2) opposite to the axial recess (16A) of the check valve (3A), is provided with said operating lever (13).

9. The shut-off valve for liquefied gas containers according to claim 8, **characterized in that** between the shut-off assembly (47), the threaded sleeve (49) and the wall and bottom of the axial recess (16A), there is formed a surrounding chamber (51) in which there is housed a spring (48) urging the shut-off assembly (47) against its closed position.

10. The shut-off valve for liquefied gas containers according to claim 8, **characterized in that** the shut-off assembly (47) is provided in its main body (52) with an axial cylinder (57), which is in communication with a conduit (58) at the level of its bottom with the surrounding chamber (51), at the same time as in said cylinder (57) there moves loosely with respect to the wall thereof, a plunger (59) which allows the controlled passage of the gas from the surrounding chamber (51) when the shut-off assembly (47) is open by the action of the actuator.

11. The shut-off valve for liquefied gas containers according to claim 10, **characterized in that** the plunger (59), in a limit position determined by a sudden increase in the discharge flow-rate of the gas, engages its own shut-off seat formed by a sealing gasket (60) mounted in the mouth of the cylinder (57) in which the said plunger (59) moves.

12. The shut-off valve for liquefied gas containers according to claim 10, **characterized in that** the pressure of the gas may act on the plunger (59), holding it in a floating position during its discharge, because the base has access means for the gas allowing the pressure thereof to act when the plunger (59) is in the rest position at the bottom of the cylinder (57).

13. The shut-off valve for liquefied gas containers according to claim 12, **characterized in that** the access means are formed by one of the group comprising providing in the base of the plunger (59) a protuberance (61) spacing it from the bottom of the cylinder, a gas inlet through said bottom inciding on the base of the plunger (59) and one or more diametric grooves in said base of the plunger (59) and/or in the bottom of the cylinder, either alone or in combinations thereof.

14. The shut-off valve for liquefied gas containers according to claim 2, in which the support body (2) is provided axially with an actuator (14B) controlled by the desmodromic cam (11) having said operating lever (13) and with means for insertion by screwing (6) in the mouth (7) of the container (8), **characterized in that** the actuator (14B), which is tubular over its entire length, is firmly associated at one end with an external shut-off assembly (62), engages an internal shut-off assembly (72) and communicates the interior thereof with the atmosphere.

15. The shut-off valve for liquefied gas containers according to claim 14, **characterized in that** the actuator (14B) is formed by a tube (63) extending along an axial conduit (15) of the support body (2) and has a flared end (64) fixed to the external shut-off assembly (62), while it is fixed at its other end to an open hood (65) which is provided with sealing gaskets (17) and a lubrication depression (17A), for its movement along the interior of the axial conduit (15), with an orifice (66) in communication with the atmosphere and articulated at (12) to a desmodromic cam (11) provided with an operating lever (13).

16. The shut-off valve for liquefied gas containers according to claim 14, **characterized in that** the external shut-off assembly (62) is provided internally and in communication with the actuator (14B) with a valve (78) calibrated at a risk pressure which discharges the gas contained in the container at an abnormally high pressure.

17. The shut-off valve for liquefied gas containers according to claim 14, **characterized in that** the internal shut-off assembly (72) is formed by a cylindrical cup (81) having an interior frustoconical mouth (82), which is fixed to the actuator (14B) crossing its bottom (83), which bottom (83) has an orifice (84) for the passage of the gas and is urged by a spring (48A) and is provided in its interior with a piston (85) which, freely crossed by the actuator (14B), is provided with a shut-off gasket (86) to be engaged with the concave part of the frustoconical mouth (82) of said cup (81).

18. The shut-off valve for liquefied gas containers according to claim 17, **characterized in that** the spring (48A) urging the cylindrical cup (81) is seated on a washer, removeably fixed in an end axial recess of the support body (2), which is crossed loosely by the tubular body (63) of the actuator (14B).

## Patentansprüche

1. Absperrventil für für den industriellen und privaten Gebrauch bestimmte Flüssiggasbehälter, insbesondere Propangasbehälter, wobei das Absperrventil ein Rückschlagventil (3) aufweist, das automatisch schließt und das mittels eines mit einem Druckminderer versehenen Regelventils willkürlich geöffnet wird, und mit dem die Förderung der Flussrate und der Druck des Gases im Gebrauch gesteuert wird und das dazu dient, eine Förderung des Gases aus dem Behälter (8) zu erlauben sowie um denselben Behälter (8) direkt mit Flüssiggas zu befüllen, möglichen Überdruck des Gases in dem Behälter (8) zu steuern sowie im Falle einer versehentlichen Trennung des Verbrauchergeräts in Bezug auf das Regelventil des Flüssiggasbehälters, für die Anzeige und Kontrolle des Gases zu sorgen, wobei das Absperrventil (1) durch einen Trägerkörper (2) ausgebildet ist, der mit einer Befestigungseinrichtung für eine Anbringung an der Öffnung des Behälters (8) versehen ist und der das Rückschlagventil (3) mit einer Einrichtung (14) zum Öffnen und Schließen des Behälters (8) verbindet, **dadurch gekennzeichnet, dass** jene Einrichtung (14) zum Öffnen und Schließen durch einen desmodromischen Exzenter (11), der einen Betätigungshebel (13) aufweist, gesteuert wird.

2. Absperrventil für Flüssiggasbehälter nach Anspruch 1, **dadurch gekennzeichnet, dass** der durch eine axiale Leitung (15) durchzogene Trägerkörper (2) in einen offenendigen Abschnitt (16) untereilt ist, der mit einer durch Verschraubung in die Öffnung (7) des Flüssiggasbehälters (8) einzubringenden Einrichtung (6) versehen ist, in einen mittleren Abschnitt, der mittels einer quer verlaufenden Leitung (9), die in eine Gasausgabeöffnung (27) mündet, nach außen kommuniziert, und in einen teilweise geschlossenen Endabschnitt, der eine laterale offene Ausnehmung (10) ausbildet, in der jener desmodromische Exzenter (11) angebracht ist und der, versehen mit jenem Betätigungshebel (13), zwischen gegenüberliegenden Wänden (10A) und (10B) jener Ausnehmung (10) gleitet, um auf die Einrichtung (14) zum Öffnen und Schließen des Rückschlagventils (3) einzuwirken.

3. Absperrventil für Flüssiggasbehälter nach Anspruch 2, wobei:
jenes Rückschlagventil (3) durch einen lateral offenen Sprungfederkörper (19) ausgebildet ist, wobei sich im Innern jenes Körpers (19) eine Absperreinrichtung (21) bewegt, die gegen einen Absperreinrichtungssitz (22) mittels einer Feder (23) gedrückt wird;
jene Einrichtung zum Öffnen und Schließen des Rückschlagventils (3) aus einem Aktor für die Absperreinrichtung (21) des Rückschlagventils (3) besteht, und zwar in Form einer axial wirkenden Schubkraft, wobei der Aktor durch einen Schaft (14) ausgebildet ist, der im Innern der in dem Trägerkörper (2) ausgebildeten, axial verlaufenden Leitung (15) gleitet, wobei der Schaft (14) an einem Körperabschnitt (14B) einen kleineren Durchmesser aufweist und an seinem freien Ende die Absperreinrichtung (21) des Rückschlagventils (3) in Eingriff nimmt, und an seinem anderen Körperabschnitt (14A) einen größeren Durchmesser aufweist, sowie Dichtungsmittel (17), und zwar für sein Gleiten in einem Abschnitt der axial verlaufenden Leitung (15), wobei jener Abschnitt zwischen einem Ende der axial verlaufenden Leitung (15) und einer dazu quer verlaufenden Leitung (9) liegt und einen Abschnitt jener axial verlaufenden Leitung (15) festlegt, der zwischen der Absperreinrichtung (21) des Rückschlagventils (3) sowie der quer verlaufenden Leitung (9) liegt und nach außen kommuniziert, indem er mit einer mit einem Gewinde versehenen Gasförderöffnung öffnet;
**dadurch gekennzeichnet, dass** der Schaft (14) an dem Abschnitt (14A), an dem er einen größeren Durchmesser aufweist, an jenen desmodromischen Exzenter (11), der jenen Betätigungshebel (13) aufweist und zwischen beiden parallelen Wänden (10A, 10B) der Endausnehmung (10) des Trägerkörpers (2) gleitet, angelenkt ist.

4. Absperrventil für Flüssiggasbehälter nach Anspruch 3, **dadurch gekennzeichnet, dass** die Gasausgabeöffnung (27) in ihrem Innern mit einer Dichtungsmuffe (28) und an ihrer Außenseite mit einem Gewinde versehen ist sowie einer mit einem Gewinde versehenen Sicherheitskappe (4), wobei die mit einem Gewinde versehene Sicherheitskappe (4) an einem oszillierenden Träger (5) angebracht ist, der an das Ende des Trägerkörpers angewinkelt ist, wo die Ausnehmung (10) für das Gehäuse des desmodromischen Exzenters (11) angeordnet ist.

5. Absperrventil für Flüssiggasbehälter nach Anspruch 4, **dadurch gekennzeichnet, dass** die mit einem Gewinde versehene Sicherheitskappe (4) mit einer Originalitätssicherungseinrichtung (38) versehen ist.

6. Absperrventil für Flüssiggasbehälter nach Anspruch 5, **dadurch gekennzeichnet, dass** die Originalitätssicherungseinrichtung aus einem Stift (38) besteht, der unbewegbar zwischen dem oszillierenden Träger (5) und einem Spalt der Krone (35) der mit einem Gewinde versehenen Sicherheitskappe (4) installiert ist und der so ausgestaltet ist, dass er bricht, wenn die mit einem Gewinde versehene Sicherheitskappe (4) zum ersten Mal betätigt wird und die Gewähr für den Inhalt des Behälters übernimmt.

7. Absperrventil für Flüssiggasbehälter nach Anspruch 4, **dadurch gekennzeichnet, dass** der durch den Gleitschaft (14) ausgebildete Aktor zwischen seinem Punkt der Betätigung (10) in Bezug auf den desmodromischen Exzenter (11) und dem gleitenden Dichtungsmittel (17) ein Gehäuse (18) für den Kopf eines Rückhalters (39) aufweist, der den Trägerkörper (2) durchquert und durch den oszillierenden Träger (5) der mit dem Gewinde versehenen Kappe (4) in seine geschlossene Position gezwungen wird, um das Blockieren des Gleitschafts (14) zu bestimmen und den Betätigungshebel (13) des desmodromischen Exzenters (11) außer Funktion zu setzen.

8. Absperrventil für Flüssiggasbehälter nach Anspruch 2, wobei:
jenes Rückschlagventil (3A) in einer großen axialen Ausnehmung (16A) ausgebildet ist, die an dem Ende (6) zum Einsetzen des Trägerkörpers (2) in die Öffnung (7) des Behälters mittels Verschrauben angeordnet ist, wobei in der axialen Ausnehmung (16A) eine Absperreinrichtung (47) angeordnet ist, die sich, betätigt durch eine Feder (48) und versehen mit einem externen O-Ring, in der großen Endausnehmung (16A) erstreckt und einerseits durch eine Hülse (49) geführt wird, die in die Öffnung jener Ausnehmung geschraubt ist, die zugleich einen kegelstumpfförmigen Sitz (50) für jenen O-Ring (53A) bereitstellt, und andererseits durch eine kleinere axiale Ausnehmung, die in dem Boden jener großen Ausnehmung offen ist und in Kommunikation mit einer Leitung (15) steht, die ebenfalls axial ist und in der sich ein Aktor für die Absperreinrichtung (47) als Einrichtung (14) zum Öffnen und Schließen des Rückschlagventils befindet;
jene Absperreinrichtung (47) ausgebildet ist durch Verbindung eines Hauptkörpers (52) und einer Führungsbuchse (56), die einen Zylinder (57) für einen Kolben (59) ausbilden, der an einem Ende in Kommunikation mit einer Umgebungskammer (51) der Absperreinrichtung (47) steht; und wobei
der Aktor für die Absperreinrichtung (47) des Rückschlagventils (3A) durch einen Schaft (14A) ausgebildet ist, der abgedichtet gleitet und Begrenzungen innerhalb der axialen Leitung (15) des Trägerkörpers (2) aufweist, wobei der Schaft (14A) an einem (14d) seiner Enden mit einem Sicherheitsanschlag, der einen O-Ring (46) aufweist, versehen ist, wobei jenes eine Ende (14d) des Schafts (14A) als ein sich mit einer Öffnung (45) deckendes Rohr ausgebildet ist, und zwar quer zu jener axialen Leitung (15), die sich zu der Außenseite des Trägerkörpers öffnet, und zwar durch das Fitting (9) und die Gasabgabeöffnung (27);
**dadurch gekennzeichnet, dass** der Schaft (14A) an seinem anderen Ende (14c) an jenen desmodromischen Exzenter (11) angelenkt ist, der, aufgenommen in einer Endausnehmung (10) jenes Trägerkörpers (2), und zwar gegenüberliegend zu der axialen Ausnehmung (16A) des Rückschlagventils (3A), mit jenem Betätigungshebel (13) versehen ist.

9. Absperrventil für Flüssiggasbehälter nach Anspruch 8, **dadurch gekennzeichnet, dass** zwischen der Absperreinrichtung (47), der Gewindehülse (49) und der Wand und dem Boden der axialen Ausnehmung (16A) eine Umgebungskammer (51) ausgebildet ist, in der eine Feder (48) untergebracht ist, die die Absperreinrichtung (47) gegen ihre geschlossene Position drängt.

10. Absperrventil für Flüssiggasbehälter nach Anspruch 8, **dadurch gekennzeichnet, dass** die Absperreinrichtung (47) in ihrem Hauptkörper (52) mit einem axialen Zylinder versehen ist, der in Kommunikation mit einer Leitung (58) steht, und zwar auf Höhe seines Bodens mit der Umgebungskammer (51) und zu dem gleichen Zeitpunkt, zu dem sich ein Kolben (59) in dem Zylinder (57) lose im Verhältnis zu der Zylinderwand bewegt, wodurch der kontrollierte Durchgang des Gases aus der Umgebungskammer (51) erlaubt wird, wenn die Absperreinrichtung (47) durch Betätigung des Aktors offen ist.

11. Absperrventil für Flüssiggasbehälter nach Anspruch 10, **dadurch gekennzeichnet, dass** der Kolben (59) in einer Grenzlage, die durch einen plötzlichen Anstieg der Förderflussrate des Gases bestimmt wird, seine eigene Absperrbefestigung in Eingriff nimmt, die durch eine Flanschdichtung (60) ausgebildet und in der Öffnung des Zylinders (57), in dem sich der Kolben bewegt, montiert ist.

12. Absperrventil für Flüssiggasbehälter nach Anspruch 10, **dadurch gekennzeichnet, dass** der Druck des Gases auf den Kolben (59) einwirken und ihn in einer Schwimmstellung während seines Förderhubs halten kann, weil die Basis eine Zutrittseinrichtung für das Gas aufweist und es dessen Druck erlaubt, seine Wirkung zu entfalten, wenn sich der Kolben (59) in seiner Ruhestellung an dem Boden des Zylinders befindet.

13. Absperrventil für Flüssiggasbehälter nach Anspruch 12, **dadurch gekennzeichnet, dass** die Zutrittseinrichtung ausgebildet ist aus der Gruppe umfassend das Bereitstellen einer in der Basis des Kolbens (59) ausgebildeten Protuberanz (61), um den Kolben vom Boden des Zylinders zu beabstanden, eines Gaseinlasses durch jenen Boden, sowie einer oder mehrerer diametraler Rillen in jener Basis des Kolbens (59) und/oder in dem Boden des Zylinders, und zwar jeweils alleine oder in Kombination.

14. Absperrventil für Flüssiggasbehälter nach Anspruch 2, wobei der Trägerkörper (2) axial mit einem Aktor (14B) bereitgestellt ist, der durch den und jenen Betätigungshebel (13) aufweisenden desmodromischen Exzenter (11) gesteuert wird, der Trägerkörper (2) weiterhin eine Einrichtung (6) zum Einsetzen in die Öffnung (7) des Behälters mittels Verschraubens aufweist, **dadurch gekennzeichnet, dass** der Aktor (14B), der röhrenförmig über seine gesamte Länge ist, fest an einem Ende mit einer externen Absperranordnung (62) verbunden ist und eine interne Absperranordnung (72) in Eingriff nimmt und deren Inneres mit der Atmosphäre in Kommunikation steht.

15. Absperrventil für Flüssiggasbehälter nach Anspruch 14, **dadurch gekennzeichnet, dass** der Aktor (14B) durch eine Röhre (63) ausgebildet ist, dich sich entlang der axialen Leitung (15) des Trägerkörpers (2) erstreckt und ein ausgestelltes Ende (64) aufweist, das mit der externen Absperranordnung (62) fest verbunden ist, während er an seinem anderen Ende fest an einer offenen Haube (65) befestigt ist, die mit Dichtungen (17) versehen ist sowie mit einer Schmiervertiefung (17A) für eine Bewegung entlang des Innern der axialen Leitung (15), sowie mit einer Öffnung (66), die in Kommunikation mit der Atmosphäre steht und an einem Punkt (12) an einen desmodromischen Exzenter (11) gelenkt ist, der mit einem Betätigungshebel (13) versehen ist.

16. Absperrventil für Flüssiggasbehälter nach Anspruch 14, **dadurch gekennzeichnet, dass** die externe Absperranordnung (62) mit einem internen und mit dem Aktor (14B) kommunizierenden Ventil (78) versehen ist, wobei das Ventil auf einen Risikodruck kalibriert ist und Gas, das in dem Behälter ist, bei abnormalen Höhen ablässt.

17. Absperrventil für Flüssiggasbehälter nach Anspruch 14, **dadurch gekennzeichnet, dass** die interne Absperranordnung (72) durch einen zylindrischen Becher (81) ausgebildet ist, der eine innere, kegelstumpfförmige Öffnung (82) aufweist, die mit dem Aktor (14B) über dessen Boden (83) fest verbunden ist, wobei der Boden (83) eine Öffnung (84) für den Durchgang des Gases aufweist und durch eine Feder (48A) betätigt wird, und im Innern mit einem Kolben (85) versehen ist, der frei durch den Aktor (14B) passierbar ist und mit einer Absperrdichtung (68) vorgesehen ist, um mit dem konkaven Abschnitt der kegelstumpfförmigen Öffnung (82) des Bechers (81) in Eingriff genommen zu werden.

18. Absperrventil für Flüssiggasbehälter nach Anspruch 17, **dadurch gekennzeichnet, dass** die Feder (84), die auf den zylindrischen Becher (81) einwirkt, auf einer Unterlegscheibe angeordnet ist, die entfernbar in einer Endaxialausnehmung des Trägerkörpers (2) befestigt ist, die lose durch den röhrenförmigen Körper (63) des Aktors (14B) durchkreuzt wird.

## Revendications

1. Soupape de coupure pour récipients de gaz liquéfié, spécialement appropriée pour des récipients de gaz de pétrole liquéfié, dans leur utilisation industrielle et ménagère, qui sont équipés d'un clapet anti-retour (3) qui se ferme automatiquement et s'ouvre volontairement en moyen d'une soupape régulatrice possédant un réducteur de pression, avec laquelle la fourniture, le débit et la pression du gaz sont commandés en utilisation, et qui est destinée à autoriser la délivrance du gaz à partir du récipient (8), le remplissage direct de ce même récipient (8) avec du gaz liquéfié, le contrôle d'une éventuelle pression excessive du gaz dans le récipient (8) et la détection et le contrôle du gaz en cas de déconnexion accidentelle entre l'appareil consommateur et la soupape régulatrice du récipient de gaz liquéfié (8), ladite soupape de coupure (1) étant formée d'un corps porteur (2) qui, étant équipé de moyens pour la fixation à la bouche (7) du récipient (8) associe ledit clapet anti-retour (3) à ses moyens d'ouverture et de fermeture (14), **caractérisée en ce que** lesdits moyens d'ouverture et de fermeture (14) sont commandés par une came desmodromique (11) ayant un levier de manoeuvre (13).

2. Soupape de coupure pour récipients de gaz liquéfié selon la revendication 1, **caractérisée en ce que** le corps porteur (2), traversé par un conduit axial (15), est subdivisé en une partie d'extrémité ouverte (16) qui est munie de moyens (6) pour insertion par vissage dans la bouche (7) du récipient de gaz liquéfié (8), dans une partie intermédiaire qui communique avec l'extérieur au moyen d'un conduit transversal (9) qui débouche dans une bouche de décharge du gaz (27) et une partie d'extrémité partiellement fermée qui forme une niche (10) ouverte latéralement, dans laquelle est montée ladite came desmodromique (11) qui, munie dudit levier de manoeuvre (13), coulisse entre deux parois opposées (10A) et 10B) de ladite niche (10) pour agir sur les moyens d'ouverture et de fermeture (14) du clapet anti-retour (3).

3. Soupape de coupure pour récipients de gaz liquéfié selon la revendication 2, dans laquelle :
ledit clapet anti-retour (3) est formé d'un corps (19) de boîte à ressort (19) ouvert latéralement à l'intérieur duquel se déplace un élément de coupure (21) qui est pressé contre un siège d'élément de coupure (22) par un ressort (23) ;
lesdits moyens d'ouverture et de fermeture dudit clapet anti-retour (3) consistent en un actionneur agissant sur ledit élément de coupure (21) du clapet anti-retour (3) par poussée axiale, qui est formé d'une tige (14) coulissant à l'intérieur du conduit axial (15) disposée dans le corps porteur (2) et qui, dans une première partie (14B), est de plus petit diamètre et attaque à son extrémité libre l'élément de coupure (21) du clapet anti-retour (3) et, dans l'autre partie (14A), est de plus grand diamètre et porte des moyens d'étanchéité (17) pour son coulissement à l'intérieur dudit conduit axial (15) dans une partie de ce dernier comprise entre une extrémité dudit conduit axial (15) et un conduit (9) transversal à celui-ci qui met une partie dudit conduit axial (15) comprise entre l'élément de coupure (21) du clapet anti-retour (3) et ledit conduit transversal (9) en communication avec l'espace extérieur, dans lequel il ouvre par une bouche de délivrance de gaz filetée (27) ;
**caractérisée en ce que** ladite tige (14), dans sa partie de plus grand diamètre (14A), est articulée à ladite came desmodromique (11) qui présente ledit levier de manoeuvre (13) et qui coulisse entre les deux parois parallèles (10A, 10B) de la niche terminale (10) dudit corps porteur (2).

4. Soupape de coupure pour récipients de gaz liquéfié selon la revendication 3, **caractérisée en ce que** la bouche de délivrance de gaz (27) est munie intérieurement d'un manchon d'étanchéité (28) et est filetée extérieurement et munie d'un capuchon de sécurité fileté (4), ledit capuchon de sécurité fileté (4) étant monté sur un support oscillant (5) qui est articulé sur l'extrémité du corps porteur à l'endroit où est située la niche (10) destinée à loger la came desmodromique (11).

5. Soupape de coupure pour récipients de gaz liquéfié selon la revendication 4, **caractérisée en ce que** le capuchon de sécurité fileté (4) est muni d'un moyen d'inviolabilité (38).

6. Soupape de coupure pour récipients de gaz liquéfié selon la revendication 5, **caractérisée en ce que** le moyen d'inviolabilité est constitué par une cheville (38) qui, montée de façon inamovible entre le support oscillant (5) et un cran (36) d'une couronne (35) du capuchon fileté (4), est susceptible de se briser lorsque le capuchon de sécurité fileté (4) est manoeuvré pour la première fois et garantit le contenu du récipient.

7. Soupape de coupure pour récipients de gaz liquéfié selon la revendication 4, **caractérisée en ce que** l'actionneur formé par la tige coulissante (14) possède, entre son point d'articulation (12) sur la came desmodromique (11) et le moyen d'étanchéité coulissant (17), un alvéole (18) pour la tête d'un organe d'arrêt (39) qui traverse le corps porteur (2) et est pressé par le support oscillant (5) du capuchon fileté (4) dans sa position fermée pour déterminer le blocage de ladite tige coulissante (14) et mettre hors d'action le levier de manoeuvre (13) de la came desmodromique (11).

8. Soupape de coupure pour récipients de gaz liquéfié selon la revendication 2, dans laquelle :
ledit clapet anti-retour (3A) est formé dans un grand évidement axial (16A), ménagé à l'extrémité (6) prévue pour l'insertion par vissage du corps porteur (2) dans la bouche (7) du récipient (8), dans lequel évidement axial (16A) est disposé un ensemble de coupure (47) qui, sollicité par un ressort (48) et équipé d'une bague torique extérieure (53A), s'étend dans ledit grand évidement terminal (16A) en étant guidé, d'une part, par un manchon (49) vissé dans la bouche dudit évidement, qui forme en même temps un logement tronconique (50) pour ladite bague torique (53A) et, d'autre part, par un évidement axial plus petit ouvert dans le fond dudit grand évidement et en communication avec un conduit (15) qui est aussi axial et dans lequel s'étend un actionneur dudit ensemble de coupure (47) formant le moyen d'ouverture et de fermeture (14) du clapet anti-retour (3A) ;
ledit ensemble de coupure (47) étant formé par l'association d'un corps principal (52) et d'une bague de guidage (56) qui forme un cylindre (57) pour un plongeur (59) qui est en communication à une extrémité avec une chambre enveloppante (51) de l'ensemble de coupure (47) ; et
ledit actionneur de l'ensemble de coupure (47) du clapet anti-retour (3A) étant formé d'une tige (14A) agencée à joint étanche coulissant et dans certaines limites à l'intérieur du conduit axial (15) du corps porteur (2), laquelle tige (14A) est munie, à une extrémité (14d), laquelle est conformée en tube jusqu'à l'endroit qui coïncide avec un orifice (45) transversal audit conduit axial (15) qui s'ouvre sur l'extérieur du corps porteur à travers le raccord (9) et la bouche de délivrance de gaz (27), d'une collerette de butée présentant une bague d'étanchéité torique (46) ;
**caractérisée en ce que** ladite tige (14A) est articulée, à son autre extrémité (14c), sur ladite came desmodromique (11) qui est logée dans une niche d'extrémité (10) du même corps porteur (2) située à l'opposé dudit évidement axial (16A) du clapet anti-retour (3A), et est munie dudit levier de manoeuvre (13).

9. Soupape de coupure pour récipients de gaz liquéfié selon la revendication 8, **caractérisée en ce que**, entre l'ensemble de coupure (47), le manchon fileté (49) et la paroi et le fond de l'évidement axial (16A), est formée une chambre enveloppante (51) dans laquelle est logé un ressort (48) qui presse l'ensemble de coupure (47) contre sa position fermée.

10. Soupape de coupure pour récipients de gaz liquéfié selon la revendication 8, **caractérisée en ce que** l'ensemble de coupure (47) est muni, dans son corps principal (52), d'un cylindre axial (57) qui est en communication par un conduit (58), au niveau de son fond, avec la chambre enveloppante (51), en même temps que, dans ledit cylindre (57), se déplace, avec jeu par rapport à sa paroi, un plongeur (59) qui autorise le passage contrôlé du gaz sortant de la chambre enveloppante (51) lorsque l'ensemble de coupure (47) est ouvert par l'action de l'actionneur.

11. Soupape de coupure pour récipients de gaz liquéfié selon la revendication 10, **caractérisée en ce que** le plongeur (59), dans une position limite déterminée par un accroissement soudain du débit de décharge du gaz, s'appuie contre son siège de coupure formé par une garniture d'étanchéité (60) montée dans la bouche du cylindre (57) dans lequel ledit plongeur (59) se déplace.

12. Soupape de coupure pour récipients de gaz liquéfié selon la revendication 10, **caractérisée en ce que** la pression du gaz peut agir sur le plongeur (59), en le maintenant dans une position flottante pendant sa décharge, parce que la base possède des moyens d'accès pour le gaz qui permettent à sa pression d'agir lorsque le plongeur (59) est dans la position de repos au fond du cylindre (57).

13. Soupape de coupure pour récipients de gaz liquéfié selon la revendication 12, **caractérisée en ce que** les moyens d'accès sont formés par un élément du groupe qui comprend la formation d'une protubérance (61) prévue dans la base du plongeur (59), qui espace cette base du fond du cylindre, d'une entrée de gaz prévue à travers ledit fond et qui agit sur la base du plongeur (59), et d'une ou de plusieurs gorges diamétrales prévues dans ladite base du plongeur (59) et/ou dans le fond du cylindre, soit isolément, soit, en combinaison.

14. Soupape de coupure pour récipients de gaz liquéfié selon la revendication 2, dans laquelle le corps porteur (2) est muni axialement d'un actionneur (148) commandé par la came desmodromique (11) qui porte ledit levier de manoeuvre (13) et de moyens pour l'insertion par vissage (6) dans la bouche (7) du récipient (8), **caractérisée en ce que** l'actionneur (14B), qui est tubulaire sur toute sa longueur, est rigidement associé, à une extrémité, à un ensemble de coupure extérieur (62), attaque un ensemble de coupure intérieur (72) et met son espace intérieur en communication avec l'atmosphère.

15. Soupape de coupure pour récipients de gaz liquéfié selon la revendication 14, **caractérisée en ce que** l'actionneur (14B) est formé d'un tube (63) qui s'étend le long d'un conduit axial (15) du corps porteur (2) et qui possède une extrémité évasée (64) fixée à l'ensemble de coupure extérieur (62), tandis qu'à son autre extrémité, il est fixé à un chapeau ouvert (65) qui est muni de garnitures d'étanchéité (17) et d'une dépression de lubrification (17A) prévues pour son mouvement le long de l'intérieur du conduit axial (15), ainsi que d'un orifice (66) en communication avec l'atmosphère, et qui est articulé en (12) sur la came desmodromique (11) munie d'un levier de manoeuvre (13).

16. Soupape de coupure pour récipients de gaz liquéfié selon la revendication 14, **caractérisée en ce que** l'ensemble de coupure extérieur (62) est muni, intérieurement et en communication avec l'actionneur (14B), d'une soupape (78) étalonnée à une pression de risque, qui décharge le gaz contenu dans le récipient à une pression anormalement élevée.

17. Soupape de coupure pour récipients de gaz liquéfié selon la revendication 14, **caractérisée en ce que** l'ensemble de coupure intérieur (72) est formé d'un godet cylindrique (81) ayant une bouche intérieure tronconique (82), qui est fixé à l'actionneur (14B) qui traverse son fond (83), lequel fond (83) présente un orifice (84) pour le passage du gaz, et est sollicité par un ressort (48A) et est en outre équipé dans son volume intérieur d'un piston (85) qui, étant traversé librement par l'actionneur (14B), est muni d'une garniture d'étanchéité de coupure (86) destinée à mise en appui contre la partie concave de la bouche tronconique (82) dudit godet (81).

18. Soupape de coupure pour récipients de gaz liquéfié selon la revendication 17, **caractérisée en ce que** le ressort (48A) qui sollicite le godet cylindrique (81) est appuyé sur une rondelle qui est fixée de façon amovible dans un évidement axial terminal du corps porteur (2) et qui est traversée avec jeu par le corps tubulaire (63) de l'actionneur (14B).
